# EUROPEAN PATENT SPECIFICATION

(11) **EP 2 724 619 B1**
(45) Date of publication and mention of the grant of the patent: **27.04.2016**
(21) Application number: 12802749.7
(22) Date of filing: 15.06.2012
(51) Int. Cl.: A23C 13/12, A23C 13/08, A23D 7/00, A23L 9/20, A23L 3/36

(54) **FREEZE TOLERANT CREAM AND METHOD FOR PRODUCING SAME**
FROSTTOLERANTE SAHNE UND HERSTELLUNGSVERFAHREN DAFÜR
CRÈME CONGELABLE ET MÉTHODE DE PRODUCTION DE LADITE CRÈME

(30) Priority: 22.06.2011 JP 2011138396; 29.05.2012 JP 2012121726; 08.06.2012 JP 2012130490
(43) Date of publication of application: 30.04.2014
(73) Proprietor: Vitamin Milk Products Co., Ltd., Osaka-shi, Osaka 550-0015 (JP)
(72) Inventor: NAKAJIMA Kiyoyuki, Osaka-shi Osaka 550-0015 (JP); OZAWA Yasuhiro, Osaka-shi Osaka 550-0015 (JP); YAMADA Takayo, Osaka-shi Osaka 550-0015 (JP); SHOJI Masaru, Osaka-shi Osaka 550-0015 (JP)
(74) Representative: Schwabe - Sandmair - Marx
(86) International application number: PCT/JP2012/065295
(87) International publication number: WO 2012/176687

(56) References cited:
- GB-A- 2 166 939
- JP-A- 58 013 351
- JP-A- 2000 236 809
- JP-A- 2000 253 814
- JP-A- 2001 321 074
- JP-A- 2005 198 605
- JP-A- 2008 118 916
- "Cream ED - John Hood", 1 January 1976 (1976-01-01), WILL IT FREEZE?, CHARLES SCRIBNER'S SONS, NY, USA, PAGE(S) 43 - 44, XP009181442, ISBN: 0-684-17495-2 * see section "cream"; page 43 *

## Description

### Technical Field

The present invention relates to a cream resistant to freezing which, even when the cream is stored frozen and then thawed, can produce a whipped cream having an equivalent quality to that made from a cream without frozen storage.

It should be noted that, according to the present invention, a cream is not limited to "a product which is obtained by removal of components other than a milk fat fraction from raw milk, cow's milk or special milk" as defined by Ministerial Ordinance on Milk and Milk products Concerning Compositional Standards, etc. (Ministry of Health and Welfare Ordinance No. 52, December 27, 1951) but includes "foods manufactured using milk or milk products as principal ingredients." Specifically, although this Ministerial Ordinance defines a cream as a product having a milk fat content of 18.0% or more, and a cream that is available as a commercial product to consumers with "Classification: Cream" indicated on its container is generally called a fresh cream, a product obtained by adding vegetable oil and fat to milk fat, a product obtained by mixing an additive such as an emulsifier or a stabilizer with milk fat, a product obtained by adding vegetable oil and fat to milk fat, and further mixing an additive, and the like are indicated as "Classification: Foods manufactured using milk or milk products as principal ingredients" (hereinbelow, may also be referred to as a milk-based product) on their containers, and these products are also encompassed by a cream in the present invention. Of these, a cream containing vegetable oil and fat is generally called a compound cream.

### Background Art

Conventionally, when a cream is stored, it is generally stored in a chilled room such as a refrigerator. If a cream is stored frozen, the cream is damaged by freezing, and when the cream is thawed, the cream exhibits such properties greatly different from the smooth fluid properties of the original cream that the oil and fat component and water are separated or the fluidity is drastically reduced due to encapsulation of water by the oil and fat component. Hence, it is widely known that unlike the case of using a refrigerated cream, a smooth whipped cream cannot be obtained by whipping such a thawed cream.

For the production of a smooth whipped cream even after frozen storage, a product having its quality altered by the addition of various additives at the stage of the production of a cream, or products with a cream whipped in advance are distributed to the market while they are stored frozen.

For example, Japanese Patent Laid-Open Nos. 1994-269256 and 1997-94061 describe inventions in which even when a cream containing a surfactant, a humectant, a polysaccharide, and the like as additives is stored frozen in a whipped state or in a further state of decoration on cakes and the like, and then thawed, roughening of texture, cracking, and flavor deterioration are prevented in the cream.

Also, Japanese Patent Laid-Open No. 2000-342212 describes an invention in which a whipped cream is exposed to a magnetic field by a constant temperature magnetic field processing device and then frozen, thereby rendering the whipped cream less likely to cause roughening of texture, cracking, and the like even when it is stored frozen and then thawed.

Also, Japanese Patent Laid-Open No. 2010-273634 describes an invention in which, by regulating the trans fatty acid content and the triacylglycerol content in the oil and fat of a cream, the cream keeps its flavor such as richness and creaminess favorable even when it is frozen for a short time and then thawed in an application where a cream having a relatively low fat content is used as fluid, such as a cream to be added to coffee.

The document "Cream ED -John Hood", 1 January 1976 (1976-01-01), WILL IT FREEZE?, Charles Scribner's Sons, NY, USA, Page(s) 43 - 44, CP009181442, ISBN: 0-684-17495-2 teaches that the most successful way of freezing double or whipping cream is by chilling it thoroughly and then semi-whip it before freezing it.

### Summary of Invention

### Technical Problem

Generally, when a cream is frozen, water in the aqueous phase of an O/W type emulsion, which forms the cream, is crystallized into ice in the process of freezing. Then, while the ice crystals enlarge with time, separation of the aqueous phase and the oil phase occurs and further, a fat globule membrane encapsulating a fat globule, which composes the oil phase, is disrupted by the production of ice crystals, resulting in a failure to maintain an emulsion. When such a change of state is completed, the cream is frozen. Then, when such a cream is thawed, floatation of clumps of the oil and fat component occurs, which is called churning, and the aqueous phase and the oil phase are separated into two phases. When a cream in which such two-phase separation has occurred is used, the cream cannot be whipped or, even when it can be whipped, the resulting whipped cream has a deteriorated shape-retention property, has minute roughness on its surface, and moreover, is heavy with low overrun, greatly reducing its commercial value.

In the inventions of Japanese Patent Laid-Open Nos. 1994-269256 and 1997-94061, various additives are added to a cream, and the cream is stored frozen in a whipped state; however, neither of the documents mentions whether this cream can be whipped similarly to an unfrozen cream (hereinbelow, referred to as a chilled cream) even after the fluid cream before whipping is frozen and then thawed.

Also, in the invention described in Japanese Patent Laid-Open No. 2000-342212, a physical treatment of exposing a cream in a whipped state to a magnetic field is carried out; however, this document does not mention whether this cream can be whipped similarly to a chilled cream even after the fluid cream before whipping is frozen and then thawed.

Also, in the invention described in Japanese Patent Laid-Open No. 2010-273634, an application is described in which the fat content of a cream is regulated and the cream is used as fluid even when it is frozen and thawed; however, this document does not mention whether a cream used for Western confectionery and the like, which has a higher fat content than does a cream used for coffee and the like, can maintain its flavor after it is whipped.

In view of the above, the present invention aims to provide a low viscosity fluid cream that can produce a whipped cream equivalent to that made from a chilled cream even when a frozen-stored cream is thawed and then the thawed cream is used, without adding various additives to a cream particularly for the purpose of imparting the stability of micro gas bubbles after thawing, by using for a cream having a high fat content; a frozen cream obtained by freezing the above fluid cream; and a method for producing the above fluid cream.

### Solution to Problem

The present invention relates to a fluid cream having a fat content of 30 to 50 % by weight, the fat content comprising at least one of milk fat and vegetable oil and fat, wherein a rate of volume expansion by incorporation of micro gas bubbles is 2 to 15%, an index value at 20 °C of 20 to 100 as measured by a Mojonnier viscometer using a Mojonnier medium-sized sphere and a rate of increase in an index value at 20 °C as measured by a Mojonnier viscometer is 20 to 100 % compared to a fluid cream without micro gas bubbles.

Further, the present invention **relates to** a frozen cream obtained by freezing the fluid cream **as described above.**

Further, the present invention **relates to** a method for producing the fluid cream as **described above,** comprising incorporating micro gas bubbles by using a high speed, high shear stirrer in combination with a common stirrer.

Further, the present invention may be a fluid cream which has a fat content of 30 to 50% by weight, the fat content comprising at least one of milk fat or vegetable oil and fat, and which has micro gas bubbles incorporated thereinto by creating a turbulent convection current when ingredients are stirred and mixed.

According to the present invention, a whipped cream equivalent to that made from a widely distributed chilled cream can be made only by naturally thawing a cream in a refrigerator and the like even when it is stored frozen by alleviating the disruption of a fat globule membrane caused by ice crystals, which are produced by freezing.

Further, according to the present invention, a cream can be stored for a long term by preventing the cream from deteriorating, and therefore an unopened, unused cream can be stored until the next use. Also, the cream of the present invention can be directly produced as a frozen cream and distributed, and moreover, even when means for transporting domestically produced creams overseas is a time-consuming one such as by ship, the cream can be exported irrespective of the best-before date.

Moreover, according to the present invention, a highly freeze-resistant fluid cream can be produced without depending on novel additives, by improving a part of the conventional production facilities, which thus requires only a small amount of initial installation cost and can be widely employed.

### Brief Description of Drawing

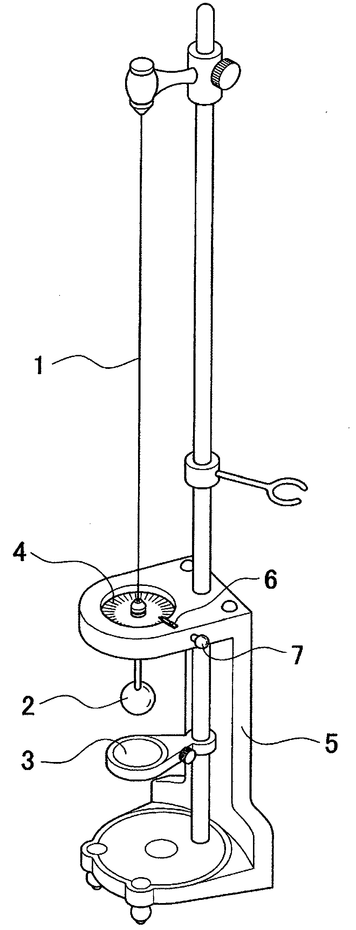

[Figure 1] Figure 1 is a perspective view of a Mojonnier viscometer.

### Description of Embodiments

Hereinbelow, the embodiments relating to the present invention will be described. It should be noted that an expression indicating a range in the description includes the upper and lower limits.

Ingredients used for carrying out the processing method according to the present invention are cow milk and an ingredient cream having a fat content of 30 to 50% by weight that is separated from cow milk.

These ingredients, cow milk and cream, are weighed out, and then are subjected to preliminary heating to around 60°C. Although it is efficient to carry out stirring and mixing at a high temperature in the production of a fluid cream, it is desirable that the cream be not heated at 70°C or above because proteins contained in the components are denatured when the fluid temperature is too high. Also, as a heating method, it is preferable to carry out heating using a heat exchanger, which enables indirect heating.

The heated ingredients are then stirred and mixed such that to the ingredients sent to a mixing pot having a certain capacity, other cow milks, other ingredient creams, vegetable oil and fat, and the like or various additives and the like are blended to be homogeneously dispersed in a step of formulation and stirring. As a stirrer to be used for this mixing, a variety of kinds such as an anchor type stirrer, a blade type stirrer having a plurality of propellers, and a half-moon-shaped stirrer are generally used; however in the present invention, these common stirrers are used, and at least any one or more of high speed, high shear stirrers are further used in combination. As the high speed, high shear stirrer, a homomixer, a dispersion mixer, an ultramixer, other mixers, and the like are preferable.

By using a high speed, high shear stirrer in combination with a common stirrer, while a laminar flow created around the shaft of the stirrer by the common stirrer, and a turbulent flow created by the high speed, high shear stirrer are formed to bring the flows thus created into collision against each other and to promote emulsification by a pressure gradient and shear force created, micro gas bubbles are formed inside the fluid mixture, namely, between the fat globules, etc., whereby enabling forming a micelle structure of a mixture of three substances, which are fluid, fat, and gas bubbles. Micro gas bubbles are incorporated as described above, and therefore such a physical difference is exhibited that the volume is more expanded than when the ingredients are simply stirred only by a common stirrer and the viscosity becomes increased, and consequently, even when the fluid cream thus produced is frozen, enlargement of ice crystals can be inhibited and damages such as the disruption of fat globules associated with the production of ice crystals by freezing can be alleviated, and defects such as separation of water and oil can be inhibited.

Also, the fluid mixture stirred and mixed according to the above method incorporates micro gas bubbles, and therefore such a physical difference will be exhibited that the volume is more expanded than when the ingredients are simply stirred only by a common stirrer and the viscosity becomes increased.

Further, the fluid mixture stirred and mixed is filtered through a mesh strainer and the like, and then, in a step of homogenization, homogeneously emulsified using a homogenizer in order to prevent defects such as floatation of the oil phase from occurring. The homogenization pressure is preferably 981-9806 kPa (10 to 100 kgf/cm²).

The fluid mixture thus homogenized is then sterilized by heating by a heat exchange, which is capable of indirect heating. Heating temperature is preferably 63 to 130°C and heating time is preferably two seconds to 30 minutes.

The sterilized fluid mixture is then homogenized again at a homogenization pressure of 0-4903 kPa (0 to 50 kgf/cm²) and subjected to a step of cooling to a temperature of 0 to 5°C by a heat exchanger, which is capable of indirect heating, whereby a fluid cream is produced as a product. The resulting fluid cream has micro gas bubbles incorporated thereinto in the step of formulation and stirring, and therefore the fluid cream will have a volume expanded more than a volume at the initiation of the step of formulation and stirring and also an increased viscosity.

From the viewpoint of cost, the gas bubbles to be mixed into the fluid cream product are preferably air; however, in an application in which alteration of quality is strictly controlled or when a period of time until the use of the cream is long, the gas bubbles may be an inert gas such as nitrogen. When the gas bubbles are of inert gas, the inside of the formulation pot can be under an inert gas atmosphere in the step of formulation and stirring.

The rate of volume expansion of the fluid cream product is a rate of increase relative to a fluid cream before incorporating micro gas bubbles thereinto by a high speed, high shear stirrer and the like, and is 2 to 15%, more preferably 4 to 10%. The rate of volume expansion of less than 2% is not preferable because sufficient freeze-resistance cannot be achieved. Meanwhile, the rate of volume expansion of more than 15% is not preferable because the production efficiency is lower and the lines are clogged at the time of transferring the cream to steps following the step of formulation and stirring.

The viscosity of the fluid cream at 20°C was measured using the Mojonnier viscometer shown in Figure 1. Specifically, first of all, a container containing a predetermined amount of fluid cream that has been adjusted to 20°C is mounted on a specimen support 3 so that a metallic medium-sized sphere 2, which is fixed at the lower end of a piano wire 1, is immersed in the fluid cream, and a graduated circle 4 is held still and then set against a scale pointer 6, which is fixed to a support 5, such that the scale of the graduated circle 4 attains position 0. Then, the graduated circle 4, which is fixed to the piano wire 1 above the medium-sized sphere 2, is rotated clockwise by 360 degrees to be set against the scale pointer 6 such that the scale of the graduated circle 4 attains position 0 again, and the graduated circle 4 is fixed by a clasp 7. Then, by releasing the clasp 7, the graduated circle 4 rotates counterclockwise by the torsion of the piano wire 1, further passes the initial still position by the momentum, and then temporarily stops at an arbitrary location. The scale on the graduated circle 4 that is indicated when the graduated circle 4 passes the initial still position and then stops was read by the scale pointer 6, and the resulting value was used as the viscosity index of the fluid cream. It should be noted that the graduated circle 4 is marked such that each scale corresponds to an angle of 1 degree in the counterclockwise direction from the position of 0. Further, measurement of viscosity using a Mojonnier viscometer is also described in pp. 269 to 270 of the 2008 edition of the compact Food Sanitation Act (Shinnippon-Hoki Publishing Co., Ltd.), and it is a measurement method widely known to those skilled in the art.

Also, a rate of increase in an index value of the fluid cream product at 20°C as measured by a Mojonnier viscometer is a rate of increase relative to a fluid cream before incorporating micro gas bubbles thereinto by a high speed, high shear stirrer and the like, and is 20 to 100%, more preferably 30 to 80%. When the rate of increase is within this range, freeze resistance is sufficiently exhibited, and further, the lines will not be clogged at the time of transferring to steps following the step of formulation and stirring.

As described above, a freeze-resistant fluid cream is produced via each step; however as means for incorporating micro gas bubbles, micro gas bubbles can be incorporated not only by entrapping gas by stirring and mixing a cream in the step of formulation and stirring, but also by ejecting gas bubbles from micro gas bubbles generator that is attached to the bottom of the pot and the like in this step.

Also, according to the present invention, the particle diameter of micro gas bubbles is preferably 10 nm to 100 µm, more preferably 100 nm to 50 µm, and most preferably 500 nm to 30 µm. When the particle diameter of micro gas bubbles is within the above range, the micro gas bubbles can be present stably in the fluid cream, and when the fluid cream is further frozen, defects such as separation in the fluid cream caused by freezing damage and the like can be inhibited.

Further, a rate of volume expansion by incorporation of micro gas bubbles is 2 to 15%, more preferably 3 to 13%, and most preferably 4 to 10%. When the rate of volume expansion by incorporation of micro gas bubbles is within the above range, the micro gas bubbles can be present stably in the fluid cream, and when the fluid cream is further frozen, defects such as separation in the fluid cream caused by freezing damage and the like can be inhibited.

Also, a rate of increase in an index value at 20°C by incorporation of micro gas bubbles as measured by a Mojonnier viscometer, namely, {(an index value at 20°C as measured by a Mojonnier viscometer when micro gas bubbles are incorporated) - (an index value at 20°C as measured by a Mojonnier viscometer when micro gas bubbles are not incorporated)} / (an index value at 20°C as measured by a Mojonnier viscometer when micro gas bubbles are not incorporated) x 100 (%), is 20 to 100%, more preferably 25 to 90%, and most preferably 30 to 80%. When a rate of increase in an index value by incorporation of micro gas bubbles is within the above range, the micro gas bubbles can be present stably in the fluid cream, and when the fluid cream is further frozen, defects such as separation in the fluid cream caused by freezing damage and the like can be inhibited.

Further, an index value at 20°C of a fluid cream having micro gas bubbles incorporated thereinto obtained as above as measured by a Mojonnier viscometer is 20 to 100. When the index value of the viscosity of the fluid cream is within the above range, the fluid cream attains free-flowing fluidity with low viscosity, from which a whipped cream and the like can be made. As described above, according to the present invention, even when a fluid cream has a low viscosity, the fluid cream can achieve high freeze resistance.

Although the fat content in the fluid cream of the present invention is not particularly limited, the fluid cream has, as a total amount of milk fat and vegetable oil and fat, a fat content of 30 to 50% by weight. In the case when the fluid cream is used for Western confectionery such as decorated cakes, a fluid cream having a fat content of less than 30% by weight fails to contain sufficient air even when it is whipped, and therefore the finished whipped cream is not smooth to the tongue. Also, when a fluid cream having a fat content of more than 50% by weight is whipped, the resulting whipped cream leaves a strong taste of oiliness and fattiness, thereby making the taste poorer.

Next, Examples according to the present invention, Comparative Examples, and Reference Examples will be further specifically described. It should be noted that Examples to be described below are preferable specific examples for carrying out the present invention, and therefore various technical limitations are placed thereon; however, unless explicitly stated otherwise, the present invention is not limited to these embodiments.

### Examples

### (Example 1)

280 kg of a milk-based product having a milk fat content of 35% by weight (hereinbelow, an ingredient cream A) was weighed out, then heated to 60°C by a plate-type heat exchanger, and entirely poured into a 330 L mixing pot. The heated ingredient cream A was stirred at a rotation speed of 10 to 20 rpm by an anchor-type stirrer attached to the mixing pot in the step of formulation and stirring, and further stirred at a rotation speed of 1500 to 3000 rpm by a homomixer, which was a high speed, high shear stirrer attached to the mixing pot independently from the anchor-type stirrer. While the anchor-type stirrer always operates in the step of formulation and stirring, the homomixer does not always operate, and thus the rotation speed of the homomixer was increased stepwise from 1500 to 3000 rpm over approximately 20 minutes, during which time stirring was carried out also using the anchor-type stirrer.

After formulation and stirring, the fluid mixture was then filtered through a 40-mesh strainer, and homogenization was carried out by a homogenizer at a homogenization pressure of 1961 kPa (20 kgf/cm²).

The fluid mixture was then passed through a plate-type heat exchanger and sterilized at 90°C for 15 seconds, and then homogenization was carried out again by a homogenizer at a homogenization pressure of 981 kPa (10 kgf/cm²).

The fluid mixture was then passed through a plate-type heat exchanger, cooled at 0 to 5°C, stored in a surge tank, and then packed in one carton of packs and stored in a refrigerator at 5°C, whereby the fluid cream, which was a product, was obtained.

The resulting fluid cream had a fat content of 35% by weight, and compared to the volume after pouring the ingredient in the step of formulation and stirring, the volume was expanded by 6.0% by volume, and the index value of viscosity at 20°C (Mojonnier method) was 55. Also, when stirring by a high speed, high shear stirrer is not carried out in the step of formulation and stirring, the index value of viscosity at 20°C (Mojonnier method) is 40, which is the same as Comparative Example 1 to be described below, thereby indicating that the rate of increase in the index value was 37.5%. It should be noted that the Mojonnier method, which was adopted for viscosity measurement, is also described in the compact Food Sanitation Act sold by Shinnippon-Hoki Publishing Co., Ltd., and is a measurement method widely known to those skilled in the art. It should be noted that in the present Examples, a Mojonnier viscometer supplied by Nakamura Ika Rika Kikaiten, Y.K. (model type: N-754) was used.

### (Example 2)

Except for using 280 kg of a milk-based product having a milk fat content of 47% by weight as an ingredient (hereinbelow, an ingredient cream B), a fluid cream was obtained by the same method as used in Example 1. The resulting fluid cream had a fat content of 47% by weight, and compared to the volume after pouring the ingredient in the step of formulation and stirring, the volume was expanded by 8.0% by volume, and the index value of viscosity at 20°C (Mojonnier method) was 80. Also, when stirring by a high speed, high shear stirrer is not carried out in the step of formulation and stirring, the index value of viscosity at 20°C (Mojonnier method) is 45, which is the same as Comparative Example 2 to be described below, thereby indicating that the rate of increase in the index value was 77.8%.

### (Example 3)

Except for using 280 kg of a milk-based product having a milk fat content of 40% by weight as an ingredient (hereinbelow, an ingredient cream C), a fluid cream was obtained by the same method as used in Example 1. The resulting fluid cream had a fat content of 40% by weight, and compared to the volume after pouring the ingredient in the step of formulation and stirring, the volume was expanded by 7.0% by volume, and the index value of viscosity at 20°C (Mojonnier method) was 100. Also, when stirring by a high speed, high shear stirrer is not carried out in the step of formulation and stirring, the index value of viscosity at 20°C (Mojonnier method) is 60, which is the same as Comparative Example 3 to be described below, thereby indicating that the rate of increase in the index value was 66.7%.

### (Example 4)

Except for using as ingredients 135 kg of a milk-based product having a milk fat content of 33.4% by weight (hereinbelow, an ingredient cream D) and 15 kg of vegetable oil and fat composed of coconut oil, rapeseed oil, palm oil, and corn oil, a fluid cream was obtained by the same method as used in Example 1. The resulting fluid cream had a fat content of 30.0% by weight and 10.0% by weight of vegetable oil and fat, and compared to the volume after pouring the ingredients in the step of formulation and stirring, the volume was expanded by 4.5% by volume, and the index value of viscosity at 20°C (Mojonnier method) was 65. Also, when stirring by a high speed, high shear stirrer is not carried out in the step of formulation and stirring and micro gas bubbles are not incorporated, the index value of viscosity at 20°C (Mojonnier method) is 40, thereby indicating that the rate of increase in the index value was 62.5%.

### (Example 5)

Except for using 145 kg of the ingredient cream B as an ingredient, a fluid cream was obtained by the same method as used in Example 1. The resulting fluid cream had a fat content of 47.1% by weight, and compared to the volume after pouring the ingredient in the step of formulation and stirring, the volume was expanded by 3.7% by volume, and the index value of viscosity at 20°C (Mojonnier method) was 55. Also, when stirring by a high speed, high shear stirrer was not carried out in the step of formulation and stirring and micro gas bubbles were not incorporated, the index value of viscosity at 20°C (Mojonnier method) was 40, thereby indicating that the rate of increase in the index value was 37.5%.

### (Example 6)

Except for using 135 kg of a fresh cream having a milk fat content of 38.1 % by weight as an ingredient (hereinbelow, an ingredient cream E), a fluid cream was obtained by the same method as used in Example 1. The resulting fluid cream had a fat content of 38.1% by weight, and compared to the volume after pouring the ingredient in the step of formulation and stirring, the volume was expanded by 2.1% by volume, and the index value of viscosity at 20°C (Mojonnier method) was 25. Also, when stirring by a high speed, high shear stirrer was not carried out in the step of formulation and stirring and micro gas bubbles were not incorporated, the index value of viscosity at 20°C (Mojonnier method) was 20, thereby indicating that the rate of increase in the index value was 25%.

### (Example 7)

Except for using 150 kg of a milk-based product having a milk fat content of 30.3% by weight as an ingredient (hereinbelow, an ingredient cream F), a fluid cream was obtained by the same method as used in Example 1. The resulting fluid cream had a fat content of 30.3% by weight, and compared to the volume after pouring the ingredient in the step of formulation and stirring, the volume was expanded by 7.2% by volume, and the index value of viscosity at 20°C (Mojonnier method) was 45. Also, when stirring by a high speed, high shear stirrer was not carried out in the step of formulation and stirring and micro gas bubbles were not incorporated, the index value of viscosity at 20°C (Mojonnier method) was 25, thereby indicating that the rate of increase in the index value was 80%.

### (Comparative Example 1)

Except for not carrying out any stirring by a homomixer, which is a high speed, high shear stirrer, in the step of formulation and stirring, a fluid cream was obtained by the same method as used in Example 1. The resulting fluid cream had a fat content of 35% by weight, and compared to the volume after pouring of the ingredient in the step of formulation and stirring, the volume was not expanded, and the index value of viscosity at 20°C (Mojonnier method) was 40. Also, due to the fact that stirring by a high speed, high shear stirrer was not carried out in the step of formulation and stirring, a rate of increase in the index value of viscosity at 20°C (Mojonnier method) was 0%.

### (Comparative Example 2)

Except for using the ingredient cream B as an ingredient and not carrying out any stirring by a homomixer, which is a high speed, high shear stirrer, in the step of formulation and stirring, a fluid cream was obtained by the same method as used in Example 1. The resulting fluid cream had a fat content of 47% by weight, and compared to the volume after pouring the ingredient in the step of formulation and stirring, the volume was not expanded, and the index value of viscosity at 20°C (Mojonnier method) was 45. Also, due to the fact that stirring by a high speed, high shear stirrer was not carried out in the step of formulation and stirring, a rate of increase in the index value of viscosity at 20°C (Mojonnier method) was 0%.

### (Comparative Example 3)

Except for using the ingredient cream C as an ingredient and not carrying out any stirring by a homomixer, which is a high speed, high shear stirrer, in the step of formulation and stirring, a fluid cream was obtained by the same method as used in Example 1. The resulting fluid cream had a fat content of 40% by weight, and compared to the volume after pouring of the ingredient in the step of formulation and stirring, the volume was not expanded, and the index value of viscosity at 20°C (Mojonnier method) was 60. Also, due to the fact that stirring by a high speed, high shear stirrer was not carried out in the step of formulation and stirring, a rate of increase in the index value of viscosity at 20°C (Mojonnier method) was 0%.

### <Performance assessment>

For performance assessment of the fluid creams of Examples 1 to 7 and Comparative Examples 1 to 3 described as above, each of the fluid creams was stored frozen in a freezer at -18°C or below for 11 days, and then gradually thawed in a refrigerator over 72 hours. Using the fluid cream thus thawed, a whipped cream was produced. As to the condition of whipping, while a fluid cream was cooled so as to keep the temperature at around 10°C, the fluid cream was whipped by a whipper at a rotation speed of 500 rpm until attaining such a state of so-called 90% stiffness that stiff peaks formed when the cream was lifted up. Specifically, performance assessment was carried out by assessing the appearance and measuring the overrun.

### <Appearance>

A whipped cream obtained from each of the above creams was assessed on a three-level rating: Good: having smooth surface with good stiff peaks and a good shape-retention property (a level equal to that achieved by using a chilled cream); Fair: on the surface neither oiliness nor fattiness is observed, but some roughness is present; and Poor: on the surface roughness and coarseness are present, and oiliness and fattiness are strong, and levels Good and Fair were judged as favorable.

### <Overrun>

Overrun is an index for the amount of air contained in a whipped cream. Generally, overrun is calculated by [{(volume after whipping) - (volume before whipping)} / (volume before whipping)] × 100 (%).

The kind and amount of the ingredients, key production steps, the fluid cream products, the conditions of whipping, and the results of performance assessment were summarized and tabulated in Table 1.

### (Reference Example)

As a Reference Example corresponding to Examples 1 to 7 and Comparative Examples 1 to 3, unfrozen fluid creams of Comparative Examples 1 to 3, namely chilled creams, were whipped and overruns of the resulting whipped creams were measured. The results thereof were indicated as control overruns in Table 1, and were used as the index of overrun of each of the creams of Examples 1 to 7 and Comparative Examples 1 to 3, which were whipped after freezing and thawing.

**[Table 1]**

| | | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| | | Ingredient cream A | kg | 280 | | | | | | | 280 | | |
| | | Ingredient cream B | kg | | 280 | | | 145 | | | | 280 | |
| | | Ingredient cream C | kg | | | 280 | | | | | | | 280 |
| | Ingredients | Ingredient cream D | kg | | | | 131 | | | | | | |
| Production (excerpt) | | Ingredient cream E | kg | | | | | | 135 | | | | |
| | | Ingredient cream F | kg | | | | | | | 150 | | | |
| | | Vegetable oil and fat | kg | | | | 19 | | | | | | |
| | Step of formulation | Anchor-type stirrer | rpm | 10-20 | 10-20 | 10-20 | 20-60 | 20-75 | 20-80 | 20-60 | 10-20 | 10-20 | 10-20 |
| | and stirring | Homomixer | rpm | 1500-3000 | 1500-3000 | 1500-3000 | 1000-3600 | 1800-5300 | 1000-5500 | 900-3600 | -- | -- | -- |
| | Fat content in fluid cream | Milk fat content | % by weight | 35.0 | 47.0 | 40.0 | 30.0 | 47.1 | 38.1 | 30.3 | 35.0 | 47.0 | 40.0 |
| Product | | Vegetable oil and fat content | % by weight | -- | -- | -- | 10.0 | -- | -- | -- | -- | -- | -- |
| | Rate of volume expansion | | % | 6.0 | 8.0 | 7.0 | 4.5 | 2.7 | 2.1 | 7.2 | 0.0 | 0.0 | 0.0 |
| | Viscosity | (Mojonnier method) | -- | 55 | 80 | 100 | 65 | 55 | 25 | 45 | 40 | 45 | 60 |
| | | Temperature | °C | 10 | 10 | 10 | 10 | 10 | 10 | 10 | 10 | 10 | 10 |
| | Whipping | Rotation speed | rpm | 500 | 500 | 500 | 500 | 500 | 500 | 500 | 500 | 500 | 500 |
| Assessment | | Whipping time | min, sec | 5'02" | 4'13" | 5'05" | 9'28" | 4'45" | 4'32" | 4'36" | 6'23" | 5'17" | 7'03" |
| | Appearance | | | Good | Good | Good | Good | Fair | Good | Good | Poor | Poor | Poor |
| | Overrun | | % | 132.0 | 111.4 | 105.8 | 107.5 | 71.2 | 67.3 | 159.7 | 98.3 | 70.4 | 67.8 |
| | (Reference) Control overrun | | % | 133.6 | 116.0 | 106.6 | 126.8 | 98.4 | 96.1 | 161.1 | 133.6 | 116.0 | 106.6 |

From these results, even when the fluid cream described in the present invention has been frozen, the fluid cream can be whipped similarly to a chilled cream when the fluid cream is whipped after thawing, and can produce a whipped cream that is equivalent to a whipped cream made from a chilled cream in terms of smooth surface in appearance and good stiff peaks. Further, also in respect of overrun, it can be said that the fluid cream exhibits equivalent overrun to a chilled cream, and is freeze resistant. Meanwhile, in respect of Comparative Examples, in appearance roughness and roughness were present and oiliness and fattiness were observed on the surface, etc., resulting in those that were inferior to Examples and devoid of freeze resistance.

## Claims

1. A fluid cream having a fat content of 30 to 50 % by weight, the fat content comprising at least one of milk fat and vegetable oil and fat, wherein the rate of volume expansion by incorporation of micro gas bubbles is 2 to 15 % compared to a fluid cream without micro gas bubbles, the index value at 20 °C is 20 to 100 as measured by a Mojonnier viscometer using a Mojonnier medium-sized sphere and the rate of increase in an index value at 20 °C as measured by a Mojonnier viscometer is 20 to 100 % compared to a fluid cream without micro gas bubbles.

2. A frozen cream, which is obtained by freezing the fluid cream according to claim 1.

3. A method for producing the fluid cream according to claim 1, wherein micro gas bubbles are incorporated into the fluid cream by using a high speed, high shear stirrer in combination with a common stirrer.

## Patentansprüche

1. Flüssige Sahne, die einen Fettgehalt von 30 bis 50 Gew.-% aufweist, der Fettgehalt wenigstens eines der Fette Milchfett und pflanzliches Öl und Fett umfaßt, worin der Grad der Volumenexpansion durch Einfügung von Mikrogasbläschen 2 bis 15 % ist, verglichen mit einer flüssigen Sahne ohne Mikrogasbläschen, der Indexwert bei 20 °C 20 bis 100 ist, gemessen mittels eines Mojonnier-Viskometers unter Verwendung einer mittelgroßen Mojonnier-Kugel, und der Grad der Erhöhung des Indexwertes bei 20 °C, gemessen mittels eines Mojonnier-Viskometers, 20 bis 100 % ist, verglichen mit einer flüssigen Sahne ohne Mikrogasbläschen.

2. Gefrorene Sahne, die erhalten wird durch Frieren der flüssigen Sahne nach Anspruch 1.

3. Verfahren zur Herstellung der flüssigen Sahne nach Anspruch 1, worin Mikrogasbläschen in die flüssige Sahne eingefügt werden unter Anwendung eines Hochgeschwindigkeits-/Hochscherungs-Rührers in Kombination mit einem herkömmlichen Rührer.

## Revendications

1. Crème liquide ayant une teneur en matière grasse de 30 à 50 % en poids, la teneur en matière grasse comportant au moins une matière grasse parmi de la matière grasse laitière et de l'huile et graisse végétale, où le taux d'expansion du volume par incorporation de microbulles de gaz est de 2 à 15% par rapport à une crème liquide sans microbulles de gaz, la valeur d'indice à 20 °C étant de 20 à 100 lorsque mesurée à l'aide d'un viscosimètre Mojonnier utilisant une sphère Mojonnier de taille moyenne et le taux d'augmentation d'une valeur d'indice à 20 °C lorsque mesurée à l'aide d'un viscosimètre Mojonnier est de 20 à 100% par rapport à une crème liquide sans microbulles de gaz.

2. Crème congelée obtenue par congélation de la crème liquide selon la revendication 1.

3. Procédé de production de la crème liquide selon la revendication 1, où des microbulles de gaz sont incorporées dans la crème liquide en utilisant une combinaison d'un agitateur à haute vitesse et à haute force de cisaillement et d'un agitateur ordinaire.
